(19) **Europäisches Patentamt**

**European Patent Office**

**Office européen des brevets**

(11) **EP 0 810 418 B1**

(12) **FASCICULE DE BREVET EUROPEEN**

(45) Date de publication et mention
de la délivrance du brevet:
**26.09.2001 Bulletin 2001/39**

(51) Int Cl.$^7$: **G01C 19/56**

(21) Numéro de dépôt: **97401149.6**

(22) Date de dépôt: **26.05.1997**

(54) **Appareil de mesure de rotation**

Drehwinkelmessgerät

Apparatus for measuring rotation

(84) Etats contractants désignés:
**DE FR GB**

(30) Priorité: **29.05.1996 FR 9606618**

(43) Date de publication de la demande:
**03.12.1997 Bulletin 1997/49**

(73) Titulaire: **SAGEM S.A.**
**75016 Paris (FR)**

(72) Inventeurs:
• **Jeanroy, Alain**
**78500 Sartrouville (FR)**
• **Renault, Alain**
**95300 Pontoise (FR)**
• **Bienaime, Francis**
**95120 Ermont (FR)**

(74) Mandataire: **Fort, Jacques**
**CABINET PLASSERAUD**
**84, rue d'Amsterdam**
**75440 Paris Cedex 09 (FR)**

(56) Documents cités:
**EP-A- 0 592 171     EP-A- 0 609 929**
**US-A- 3 992 952     US-A- 4 079 630**
**US-A- 4 157 041     US-A- 5 218 867**
**US-A- 5 419 194**

## Description

La présente invention concerne de façon générale les appareils de mesure de rotation du type comprenant :

- un élément mécanique, appelé résonateur, possédant une symétrie axiale, dont l'axe est l'axe sensible de l'appareil, capable de vibrer sur une résonance mécanique,
- des capteurs sensibles à l'élongation de la vibration dudit élément dans au moins deux directions particulières,
- et des transducteurs d'application de forces au résonateur dans lesdites directions particulières, servant notamment au contrôle de la vibration.

Il existe déjà de nombreux appareils à résonateurs de ce type, dits vibrants ; ils utilisent l'accélération de Coriolis, qui agit sur un élément en vibration lorsque ce corps tourne. L'accélération de Coriolis est dirigée orthogonalement à la vitesse de rotation et à la direction de vibration, et elle tend à modifier l'orientation du réseau de vibration proportionnellement à la rotation dudit élément autour de l'axe sensible.

De tels appareils utilisent des résonateurs qui peuvent prendre des formes notablement différentes les unes des autres. Le résonateur peut avoir une constitution annulaire ; il peut être constitué par une plaque circulaire ou carrée ; il peut avoir une forme de bol fixé par son fond, les capteurs et les transducteurs étant alors répartis autour du bord du bol ; il peut également comporter un jeu de quatre poutres vibrantes réparties aux angles d'un carré (EP-A-0 578 519).

On sait que, dans le cas d'une résonance mécanique d'un résonateur quelconque, il est possible de représenter analytiquement un champ de vibration dans une base ayant deux modes propres pour références. On peut alors décrire la vibration par le système d'équations suivant :

$$\begin{cases} \ddot{\eta}_1 + 2\xi_1\dot{\eta}_1 + \omega^2_1\eta_1 = 2\alpha_1\Omega_{b/i}\dot{\eta}_2 + \dfrac{f_1}{m_1} \\[4mm] \ddot{\eta}_2 + 2\xi_2\dot{\eta}_2 + \omega^2_2\eta_2 = -2\alpha_2\Omega_{b/i}\dot{\eta}_1 + \dfrac{f_2}{m_2} \end{cases}$$

dont la solution est une description de la vibration.

Dans ces équations :

| | |
|---|---|
| $\eta_i$ (avec i=1 ou 2) : | coordonnées dans le plan des modes propres, |
| $\xi_i$ : | coefficients d'amortissement modal réduit, |
| $m_i$ : | masses modales, |
| $\omega_i$ : | pulsations propres, |
| $\alpha_i$ : | coefficients de couplage gyroscopiques, |
| $\Omega_{b/i}$ | vitesses de rotation inertielles du résonateur, |
| $f_i$ : | efforts généralisés. |

On exploite ces relations en plaçant des transducteurs et des capteurs de façon que :

- les capteurs donnent les composantes des deux vibrations selon les axes $\eta_1$ et $\eta_2$,
- les transducteurs permettent d'appliquer les forces $f_1$ et $f_2$ selon les mêmes axes.

On observe que, mécaniquement, les axes $\eta_1$ et $\eta_2$ présentent un angle égal à $\pi/2n$, n étant un entier supérieur ou égal à un. Par exemple, pour un anneau se déformant en ellipse, n=2 et les deux ondes propres font un angle de $\pi/4 = 45°$.

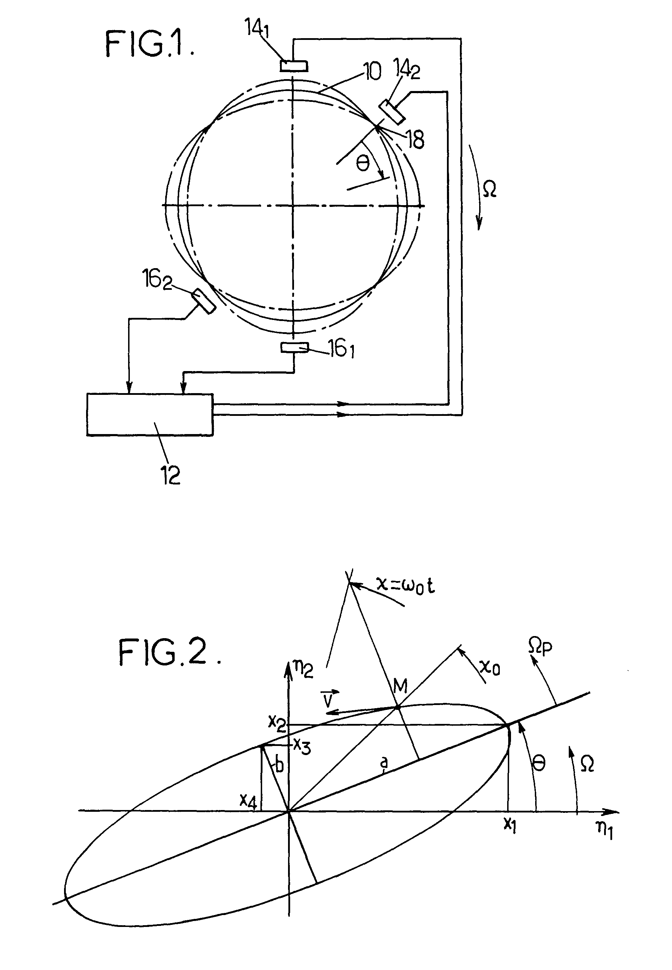

Le résonateur mécanique peut avoir des constitutions très variées. A titre d'exemple, la figure 1 montre un résonateur 10 qui peut notamment être en forme de disque ou de bol en un matériau tel que le résonateur ait de faibles pertes. Au repos, le résonateur est circulaire ou présente une structure qui mécaniquement est équivalente à un cercle comme cela est représenté en traits pleins sur la figure 1. Lorsque le résonateur vibre dans son mode d'ordre 2, il prend les deux formes extrêmes représentées, en traits mixtes et à échelle très agrandie, sur la figure 1, s'il est excité à sa fréquence de résonance par un circuit électronique 12 qui alimente deux transducteurs 14 placés à 45° l'un de l'autre. Dans la réalité, chaque transducteur 14 est alimenté en parallèle avec un transducteur placé en face et deux transducteurs placés à 90°, non représentés pour plus de simplicité.

Le déplacement radial est mesuré, dans le cas décrit, aux mêmes emplacements angulaires que les transducteurs. Pour cela, deux couples par exemple de capteurs 16 (les liaisons d'un seul capteur étant seules représentées) permettent de mesurer l'amplitude de la vibration et fournissant au circuit électronique 12 des signaux de mesure. Le circuit est prévu pour alimenter les transducteurs de façon à maintenir une amplitude de vibration constante, comme on le verra plus loin.

Si le boîtier qui supporte le résonateur tourne dans le sens indiqué par la flèche $\Omega$ d'un angle déterminé, le champ de vibrations tend à se décaler, sous l'effet des forces de Coriolis, et par exemple le noeud de vibrations 18 se déplace, s'il n'est pas contrarié par une action du circuit électronique 12, et prend par exemple un angle $\theta$ à un instant t. Cet angle est proportionnel à la rotation subie par le boîtier, avec un rapport constant et inférieur ou égal à 1, suivant le type de résonateur.

Quelle que soit la nature du résonateur mécanique, dans la mesure où il présente un mode de vibration stationnaire, d'ordre 1 au moins, le déplacement d'un point M peut être représenté, dans un référentiel de modes $\eta_1$, $\eta_2$, par le diagramme de la figure 2. Le déplacement d'un point courant M peut être représenté sous la forme paramétrique donnée plus haut. Par la suite, on développera ces formules en utilisant les notations suivantes :

$\eta_1$ et $\eta_2$ :        axes du référentiel et coordonnées dans le référentiel,

$\omega$ est la fréquence angulaire de vibration du résonateur,
$\Omega$ est la vitesse de rotation du boîtier,
$\alpha$ est un coefficient de forme, inférieur à 1.

$f_1$ et $f_2$ :        forces appliquées le long des axes $\eta_1$ et $\eta_2$, destinées en premier lieu à compenser les pertes et à corriger l'anisotropie de fréquence et en second lieu à changer de mode de fonctionnement ou à corriger le fonctionnement en utilisant des modèles d'erreur mémorisés,

M :        point courant représentatif de l'état de vibration,

$\omega_1$ et $\omega_2$ :        fréquences angulaires des deux ondes progressives résultant de la décomposition de l'onde stationnaire à fréquence angulaire $\omega$,

$\theta$ :        inclinaison du grand axe de l'ellipse représentative de la vibration dans le plan des modes, dans des axes de référence $\eta_1$ et $\eta_2$ liés au boîtier du résonateur,

$\vec{\eta}$ ou $\vec{R}$ :        vecteur représentatif du point courant M dans le repère $\eta_1$, $\eta_2$,

2a et 2b :        grand et petit axes de l'ellipse représentative de la vibration,

$VCO_1$ et $VCO_2$ :        oscillateurs à commande par tension, fonctionnant aux fréquences $\omega_1$ et $\omega_2$,

$\vec{R_1}$ et $\vec{R_2}$ :        vecteurs, de modules respectifs $r_1$ et $r_2$, tournant respectivement aux fréquences $\omega_1$ et $\omega_2$,

$ft_1$ et $ft_2$ :        forces tangentielles exercées sur le résonateur, pour entretenir les amplitudes en phase à une valeur constante,

$fr_1$ et $fr_2$ :        forces radiales exercées sur le résonateur, pour annuler les amplitudes en quadrature,

$\Omega$ :        vitesse de rotation du boîtier du résonateur,

$\Omega_p$ :        vitesse de précession, égale à $(\omega_1-\omega_2)/2$,

$C_p$ :        signal de commande de précession.

La figure 2 montre que la vitesse de rotation $\Omega$ du boîtier qui porte le résonateur a pour effet de faire tourner le champ de vibrations et, par exemple, de faire tourner d'un angle $\theta$ le grand axe 2a de l'ellipse représentant le mouvement du point. Pour un fonctionnement en gyroscope ; on déduit, d'une mesure de $\theta$, l'angle dont a tourné le boîtier du résonateur en appliquant un facteur d'échelle $\alpha$ qui dépend du résonateur et de l'ordre du mode.

Sur la figure 2, on a représenté la vibration sous forme d'une ellipse ayant un grand axe de valeur 2a et un petit axe de valeur 2b. Les variations des coordonnées $\eta_1$ et $\eta_2$ d'un point courant M en fonction du temps peuvent s'écrire :

$$\eta_1 = a \cos \omega t.\cos \theta - b \sin \omega t.\sin \theta$$

$$\eta_2 = a \cos \omega t.\cos \theta + b \sin \omega t.\sin \theta$$

La composante de vibration d'amplitude b, souvent dénommée quadrature spatiale, provoque l'apparition de dérives parasites du champ de vibrations, qui dégradent la qualité des mesures lors du fonctionnement en gyroscope.

Le document EP-A-0592171 décrit un appareil de mesure de rotation du type ci-dessus défini, comprenant des moyens électroniques d'entretien de la vibration recevant les signaux provenant des capteurs et émettant des signaux d'alimentation des transducteurs d'applications de forces à la fréquence de résonance du résonateur, ces moyens étant constitués de façon à maintenir l'amplitude de vibration à une valeur constante. Le document indique de plus qu'une boucle de contrôle secondaire reçoit un signal indiquant la rotation de la structure, qui est dirigé vers le transducteur d'attaque secondaire pour le ramener à zéro.

La présente invention vise notamment à fournir un appareil de mesure de rotation répondant mieux que ceux antérieurement aux exigences de la pratique, notamment en ce que les dérives parasites sont réduites par compensation.

Tout gyroscope nécessite un calibrage de mesure des dérives parasites. A l'heure actuelle, ce calibrage est effectué périodiquement en laboratoire.

Le but de l'invention est de permettre la mesure du coefficient de forme et des dérives parasites du gyroscope, c'est-à-dire d'effectuer un calibrage in situ, avec une interruption minimale de l'utilisation. Dans ce but, l'invention propose un appareil conforme à la revendication 1. La connaissance de la commande de précession et la mesure de la vitesse de rotation du champ de vibration qui en résulte permet de calculer, pendant une courte interruption de l'utilisation normale du gyroscope, un modèle d'erreur dû à la dérive.

Il est également possible de reboucler la sortie du gyroscope, représentative de l'angle $\theta$ (figure 2) sur les moyens électroniques, de façon à constituer un gyromètre, ce qui permet de faire fonctionner à volonté le même appareil soit en gyroscope, soit en gyromètre.

Les caractéristiques ci-dessus ainsi que d'autres apparaîtront mieux à la lecture de la description qui suit de modes particuliers de réalisation, donnés à titre d'exemples non limitatifs. La description se réfère aux dessins qui l'accompagnent, dans lesquels :

- la figure 1, déjà mentionnée, montre un réseau d'ondes stationnaires provoquées dans un résonateur vibrant à périphérie circulaire au repos ;
- la figure 2 est une représentation de la vibration d'un point du résonateur dela figure 1, dans un référentiel lié au mode ;
- la figure 3 est un schéma de principe destiné à faire apparaître les différentes fonctions de l'appareil de mesure qu'autorise l'invention ;
- la figure 3A est un schéma montrant des paramètres de fonctionnement ;
- la figure 4 est un synoptique montrant une implémentation possible du schéma fonctionnel de la figure 3.

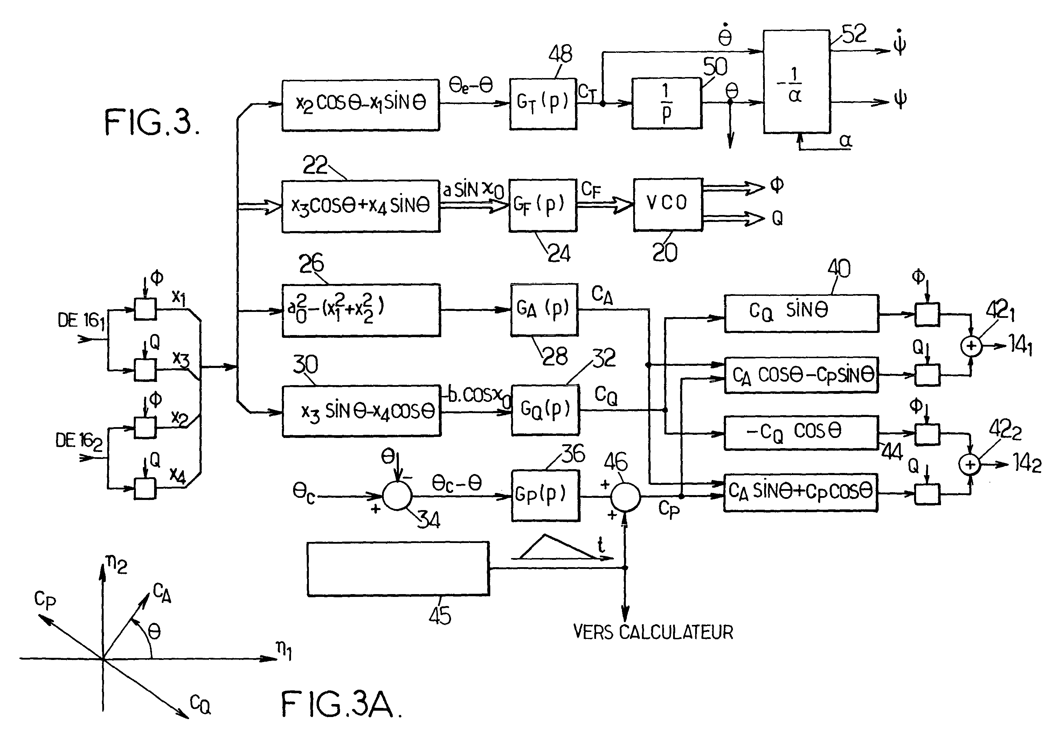

Les moyens électroniques dont la constitution de principe est montrée en figure 3 reçoivent des signaux d'entrée provenant de capteurs ayant par exemple la disposition montrée en figure 1. Ces capteurs fournissent des signaux modulés à la fréquence $\omega$ de vibration. Chaque signal de sortie peut être considéré comme ayant une composante en phase, c'est-à-dire $x_1$ pour un des capteurs $16_1$, et une composante en quadrature, $x_3$ pour le même capteur $16_1$, l'une et l'autre modulées à la fréquence $\omega$ ; et, de façon similaire, $x_2$ pour un des capteurs $16_2$ et $x_4$ pour le même capteur $16_2$.

L'exploitation de ces signaux exige qu'ils soient démodulés, ce qui implique d'extraire les composantes en phase et en quadrature des porteuses à fréquence $\omega$ provenant des deux capteurs 16. La branche des moyens électroniques destinée à fournir un signal de référence à fréquence $\omega$ contient un oscillateur commandé par tension 20 qui présentera une phase $\chi_0$, à laquelle on cherche à donner une valeur nulle, de façon que l'oscillateur constitue un invariant temporel indépendant de l'angle d'inclinaison $\theta$.

Le signal de commande de l'oscillateur 20 est élaboré par une opération 22 de calcul de $x_3\cos\theta + x_4\sin\theta$, qui fournit une sortie représentative de $a\sin\chi_0$. Cette opération peut s'effectuer sous forme analogique. L'angle $\theta$ est fourni par une autre branche des moyens, qui sera décrite plus loin. Le signal résultant de l'opération 22 est dérivé et amplifié en 24 avec un gain $G_F(p)$ et le signal de sortie $C_F$ est appliqué à l'oscillateur de référence 20, à la sortie duquel on obtient un signal de référence en phase $\Phi$ et un signal en quadrature Q. Par la suite, on désignera par amplification toutes les opérations de la forme G(p), pour simplifier.

Les signaux $\phi$ et Q ainsi obtenus sont utilisés pour effectuer une démodulation synchrone des signaux de sortie des capteurs 16.

Une branche d'entretien de la vibration stationnaire à une amplitude constante peut comporter, de façon classique, un organe ou une opération de calcul 26 permettant d'obtenir $a_0^2-(x_1^2 + x_2^2)$, où $a_0$ est l'amplitude à maintenir. Le signal d'erreur obtenu en 26 est amplifié, avec un gain prédéterminé $G_{A(p)}$ de façon à obtenir un signal $C_A$ de commande d'amplitude.

Conformément à un aspect de l'invention, le circuit électronique comporte des moyens d'annulation de la quadrature temporelle b (figure 2). Pour cela, les moyens électroniques comportent une branche de calcul d'un terme proportionnel à b. Cette branche comprend un élément ou une étape 30 de calcul de $x_3\sin\theta - x_4\cos\theta$. Le signal d'erreur $-b\cos\chi_0$ ainsi obtenu est amplifié en 32 avec un gain $G_Q(p)$ de façon à fournir une composante de commande $C_Q$.

Les moyens électroniques de la figure 3 comprennent également une branche de précession permettant de faire fonctionner le dispositif à volonté soit en gyroscope, soit en gyromètre. Cette branche reçoit en entrée la valeur de consigne $\theta_C$ de l'angle $\theta$, à maintenir entre l'axe d'oscillation (c'est-à-dire l'axe de l'ellipse de la figure 2) et l'axe de détection $\eta_1$. Un soustracteur 34 fournit un signal de sortie égal à $\theta_C-\theta$, qui constitue un signal d'erreur soumis à une amplification de gain $G_P(p)$ en 36.

Les signaux amplifiés en 28, 32 et 36 sont utilisés pour élaborer les signaux appliqués aux transducteurs 14. Chacun des signaux envoyé aux transducteurs résulte d'un traitement trigonométrique et d'une remodulation.

Les composantes destinées à annuler la quadrature temporelle sont remodulées par la composante en phase $\phi$ à fréquence $\omega$. Le signal $C_Q$ de sortie de 32 est multiplié en 40 par $\sin\theta$, modulé par la porteuse en phase $\phi$ et appliqué à un additionneur $42_1$ qui alimente le transducteur $14_1$. Le signal $C_Q$ est multiplié par $-\cos\theta$ en 44, remodulé et appliqué à un additionneur $42_2$ d'alimentation du transducteur $14_2$.

Le maintien de l'amplitude d'oscillation à une valeur constante et la précession forcée résultent d'une combinaison des signaux sortant de 28 et 36.

Le signal appliqué à l'additionneur $42_1$, après remodulation par la porteuse en quadrature Q, est obtenu par calcul de :

$$C_A\cos\theta - C_P\sin\theta$$

Le signal appliqué à l'additionneur $42_2$ après modulation par la porteuse en quadrature Q est élaboré par calcul de :

$$C_A\sin\theta + C_P\cos\theta$$

Ces formules résultent des orientations relatives des composantes $C_A$, $C_P$ et $C_Q$ telles qu'indiquées sur la figure 3A.

Le schéma de la figure 3 montre encore une commande manuelle de précession 45 permettant d'ajouter, au signal de commande des transducteurs $14_1$ et $14_2$, une composante variable et connue, destinée à provoquer une précession de la vibration. Cette composante est ajoutée à la sortie amplifiée 36, dans un additionneur 46. La commande de précession et la modification de $\dot\theta$ qui en résulte sont prises en compte dans un calculateur pour réaliser un calibrage.

La branche de calcul de $\theta$ comporte un élément ou une étape de calcul de $x_2\cos\theta - x_1\sin\theta$, qui fournit en sortie une grandeur représentative de l'écart entre la position réelle du grand axe de l'ellipse et la position estimée. Ce signal de sortie est amplifié avec un gain $G_T(p)$ en 48 et la sortie représente la vitesse de rotation $\dot\theta$, à partir de laquelle on peut obtenir, par intégration en 50, l'angle $\theta$ lui-même.

Des valeurs $\theta$ et $\dot\theta$ il est possible de passer aux vitesses de rotation à mesurer par multiplication par $-1/\alpha$, en 52.

L'ensemble des opérations qui viennent d'être décrites peuvent être effectuées à l'aide d'un micro-contrôleur de type couramment disponible dans le commerce et de quelques éléments supplémentaires. Ce micro-contrôleur permet notamment d'effectuer un bouclage permettant un fonctionnement en gyromètre et une calibration de l'appareil sans adjonction d'éléments de circuit externes autres qu'un convertisseur analogique-numérique et d'un convertisseur numérique-analogique.

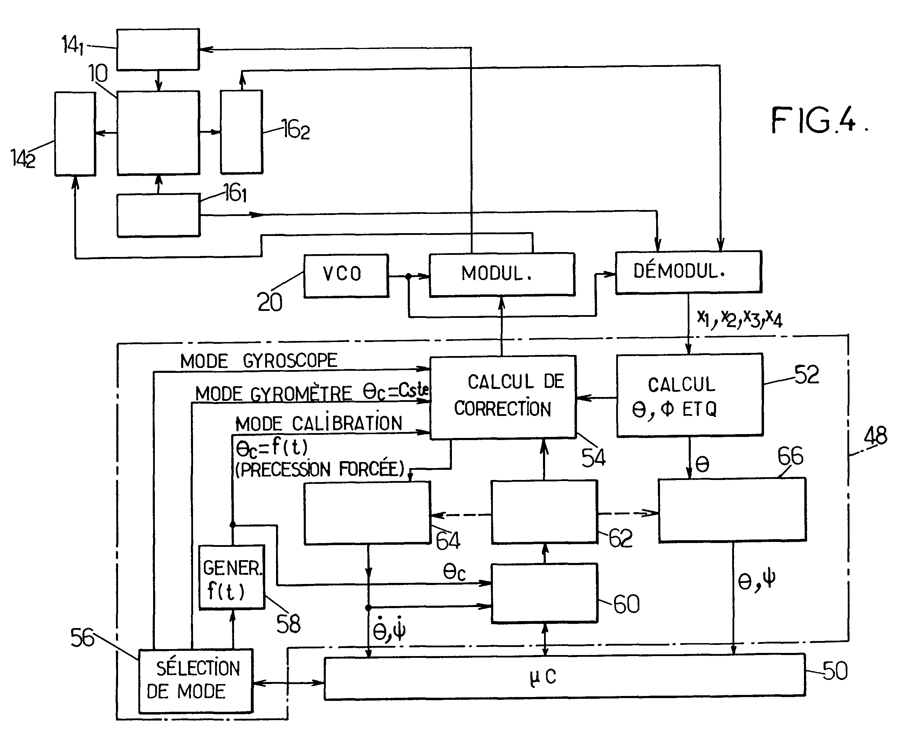

Sur la figure 4, où les éléments correspondant à ceux de la figure 3 sont désignés par le même numéro de référence, les éléments nécessaires à la mise en oeuvre de l'invention appartiennent à un interface 48 interposé entre l'ensemble constitué par le résonateur et les moyens de détection et d'excitation d'une part, un micro-contrôleur 50 permettant d'effectuer l'ensemble des calculs, d'autre part. Les signaux démodulés, $x_1$, $x_2$, $x_3$, $x_4$ sont soumis en 52 à un calcul de la vibration ou des vibrations permettant d'obtenir la valeur réelle $\theta$ de la déviation angulaire et les composantes en phase $\Phi$ et en quadrature Q de la vibration. Ces valeurs sont fournies aux moyens de correction de vibration 54 dont le fonctionnement sera différent suivant que le fonctionnement est: en mode gyroscope, c'est-à-dire en laissant $\theta$ évoluer librement, pour une valeur de consigne $\theta_C$ fixe, à laquelle doit être maintenue la valeur $\theta$ réelle ; en mode gyromètre ou en mode calibration (qui implique de faire varier dans le temps la valeur $\theta_C$, par exemple de 0° à 360°, puis de 360° à 0° pour établir un modèle d'erreur).

Des moyens de sélection de mode 56 appartenant à l'interface permettent de faire le choix entre les trois modes de fonctionnement.

Dans le cas d'un fonctionnement en mode de calibration, les moyens 56 provoquent l'émission, par un générateur 58, d'une variation temporelle de l'angle de consigne $\theta_c$ de 0 à 360°, puis un retour à 0° pour reprendre un

**EP 0 810 418 B1**

fonctionnement normal. Les valeurs successives de $\theta_C$ et les valeurs correspondantes de $\theta$ à chaque instant sont envoyées à des moyens 60 de calcul d'un modèle d'erreur, qui est ensuite mémorisé en 62.

Les valeurs de $\theta$ nécessaires à l'élaboration du modèle d'erreur sont obtenues à partir de 54, éventuellement par l'intermédiaire de moyens 64 de correction spécifique au fonctionnement gyrométrique. Le modèle d'erreur est également utilisé éventuellement en 66 pour corriger les erreurs spécifiques au fonctionnement en mode gyroscopique.

Eventuellement, plusieurs calibrages à des températures différentes peuvent être utilisés et mémorisés. Dans ce cas, une information de température est fournie aux moyens de calcul de correction.

**Revendications**

1. Appareil de mesure de rotation comprenant : un élément mécanique, appelé résonateur, possèdant une symétrie axiale, dont l'axe est l'axe sensible de l'appareil, capable de vibrer sur une résonance mécanique, des capteurs sensibles à l'élongation de la vibration dudit élément dans au moins deux directions particulières, des transducteurs d'application de forces au résonateur dans lesdites directions particulières, servant notamment au contrôle de la vibration, et des moyens électroniques d'entretien de la vibration, recevant les signaux provenant des capteurs et émettant des signaux d'alimentation desdits transducteurs d'application de force, à la fréquence de résonance du résonateur, les dits moyens électroniques étant constitués de façon à maintenir l'amplitude de vibration à une valeur constante et à annuler la composante en quadrature temporelle de la vibration,

    **caractérisé en ce que** les moyens électroniques comportent des moyens pour introduire dans la commande des transducteurs une composante déterminée de commande de précession et des moyens de calcul d'erreur à partir de la connaissance de la commande de précession et de la mesure de la vitesse de rotation du champ de vibration qui en résulte.

2. Appareil selon la revendication 1, **caractérisé en ce que** les moyens électroniques comportent une branche de calcul d'un terme proportionnel à ladite composante en quadrature à partir de la composante des signaux fournis par deux capteurs en quadrature dans le référentiel des modes, démodulés par la composante en quadrature d'une porteuse à la fréquence de résonance $\omega$ et des moyens pour élaborer un signal de correction appliqué aux transducteurs après multiplication par une fonction trigonométrique de l'angle $\theta$ entre la direction d'oscillation et l'axe commun d'un des transducteurs et d'un des capteurs, et après remodulation par la composante en quadrature avec la vitesse de la vibration ou en phase avec le déplacement en vibration, en addition aux signaux de maintien de l'amplitude.

3. Appareil selon la revendication 1 ou 2, **caractérisé en ce que** les moyens électroniques comprennent une branche d'entretien de la vibration stationnaire à une amplitude constante qui peut comporter, de façon classique, un organe ou une opération de calcul 26 permettant d'obtenir un signal d'erreur $a_0^2-(x_1^2 + x_2^2)$, où $a_0$ est l'amplitude à maintenir et $x_1$ et $x_2$ sont les composantes des signaux fournis par les deux capteurs en quadrature, démodulés par la composante en phase de la porteuse, et des moyens pour élaborer un signal d'entretien d'amplitude appliqué aux transducteurs, obtenu à partir dudit signal d'erreur et des fonctions trigonométriques de l'angle $\theta$, une remodulation par la composante en quadrature de la porteuse.

4. Appareil selon la revendication 2 ou 3, **caractérisé en ce que** lesdits moyens comprennent également une branche de précession permettant de faire fonctionner le dispositif en gyromètre, recevant en entrée une valeur de consigne $\theta_C$ de l'angle $\theta$, ayant des moyens de mesure de $\theta_C-\theta$, des moyens de multiplication par des fonctions trigonométriques de l'angle $\theta$ et d'addition à des termes d'entretien de l'amplitude avant remodulation.

5. Appareil selon la revendication 4, **caractérisé par** des moyens pour ajouter, au terme représentatif de $\theta_C-\theta$, une rampe de variation progressive de $\theta_C$.

6. Appareil selon la revendication 5, **caractérisé en ce que** la variation est une rampe progressive de 0° à 360°, puis de 360° à 0°.

**Claims**

1. A rotation-measuring apparatus comprising a mechanical component or resonator having axial symmetry and an axis which is the same as the perceptible axis of the apparatus, capable of vibrating to a mechanical resonance, pick-ups sensitive to the elongation of the vibration of the said component in at least two particular directions, transducers for applying forces to the resonator in the said particular directions and of use inter alia for monitoring the vibration, and electronic means which maintain the vibration, receive signals from the pick-ups and transmit signals for energising the said force-applying transducers at the resonance frequency of the resonator, the said electronic means being constructed so as to maintain the amplitude of vibration at a constant value and to cancel the vibration component in temporal quadrature, **characterised in that** the electronic means comprise means for introducing a given precession-control component into the control of the transducers and means for calculating the error from a knowledge of the precession control and measurement of the speed of rotation of the resulting vibration field.

2. Apparatus according to claim 1, **characterised in that** the electronic means comprise a branch for calculating a term proportional to the said component in quadrature from the component of the signals provided by two pick-ups in quadrature in the mode reference frame demodulated by the component in quadrature of a carrier wave at the resonance frequency $\omega$ and means for preparing a correction signal applied to the transducers after multiplication by a trigonometric function of the angle $\theta$ between the direction of oscillation and the common axis of one of the transducers and one of the pick-ups and after remodulation by the component in quadrature with the speed of vibration or in phase with the displacement in vibration, in addition to the amplitude-maintaining signals.

3. Apparatus according to claim 1 or 2, **characterised in that** the electronic means comprise a branch for maintaining the standing vibration at a constant amplitude, which branch may comprise, in conventional manner, a calculation means or operation (26) for obtaining an error signal $a_0^2-(x_1^2 + x_2^2)$ where $a_0$ is the amplitude to be maintained and $x_1$ and $x_2$ are the components of the signals supplied by the two pick-ups in quadrature demodulated by the carrier-wave component in phase, and means for preparing an amplitude-maintaining signal applied to the transducers obtained from the said error signal and the trigonometrical functions of the angle $\theta$, a remodulation by the carrier-wave component in quadrature.

4. Apparatus according to claim 2 or 3, **characterised in that** the said means also comprise a precession branch for operating the device as a gyrometer, the branch input receiving a set value $\theta_c$ of the angle $\theta$ and comprising means for measuring $\theta_C-\theta$, means for multiplying by trigonometric functions of the angle $\theta$ and for adding to the amplitude-maintaining terms before remodulation.

5. Apparatus according to claim 4, **characterised by** means for adding a progressive variation gradient of $\theta_C$ to the term representing $\theta_c-\theta$.

6. Apparatus according to claim 5, **characterised in that** the variation is a progressive gradient from 0° to 360°, then from 360° to 0°.

**Patentansprüche**

1. Drehwinkelmessgerät, umfassend: ein Resonator genanntes mechanisches Element das eine axiale Symmetrie besitzt, deren Achse die empfindliche Achse des Geräts ist, und das auf einer mechanischen Resonanz schwingen kann, Fühler, die bezüglich der Elongation der Schwingung des Elements in mindestens zwei besonderen Richtungen empfindlich sind, Wandler zum Anlegen von Kräften an den Resonator in diesen besonderen Richtungen, die insbesondere zur Steuerung der Schwingung dienen, und elektronische Mittel zur Unterhaltung der Schwingung, die die von den Fühlern kommenden Signale empfangen und Signale zur Versorgung der Kraftanlegungswandler mit der Resonanzfrequenz des Resonators senden, wobei die elektronischen Mittel so ausgeführt sind, dass die Schwingungsamplitude auf einem konstanten Wert gehalten wird und die zeitlich um 90° phasenverschobene Komponente der Schwingung aufgehoben wird, **dadurch gekennzeichnet, dass** die elektronischen Mittel folgendes umfassen: Mittel zum Einführen einer bestimmten Komponente zur Steuerung der Präzession in die Steuerung der Wandler und Mittel zur Berechnung der Abweichung ausgehend von der Kenntnis der Präzessionssteuerung und der Messung der sich daraus ergebenden Drehgeschwindigkeit des Schwingungsfeldes.

2. Gerät nach Anspruch 1, **dadurch gekennzeichnet, dass** die elektronischen Mittel folgendes umfassen: einen Zweig zur Berechnung eines zu dieser um 90° phasenverschobenen Komponente proportionalen Terms aus der Komponente der Signale, die von zwei im Bezugssystem der Moden um 90° phasenverschobenen Fühlern geliefert und durch die um 90° phasenverschobene Komponente einer Trägerwelle mit der Resonanzfrequen $\omega$ demoduliert werden, und Mittel zur Herstellung eines Korrektursignals, das nach Multiplikation mit einer trigonometrischen Funktion des Winkels θ zwischen der Schwingungsrichtung und der einem der Wandler und einem der Fühler gemeinsamen Achse und nach Remodulation durch die zu der Geschwindigkeit der Schwingung um 90° phasenverschobene oder mit der Schwingbewegung in Phase befindliche Komponente unter Addierung zu den Signalen zur Aufrechterhaltung der Amplitude an die Wandler angelegt wird.

3. Gerät nach Anspruch 1 oder 2, **dadurch gekennzeichnet, dass** die elektronischen Mittel einen Zweig zur Aufrechterhaltung der stationären Schwingung mit konstanter Amplitude umfassen, der auf bekannte Weise ein Rechenorgan oder eine Rechenoperation 26 aufweisen kann, das bzw. die die Herstellung eines Abweichungssignals $a_0^2-(x_1^2 + x_2^2)$ gestattet, in dem $a_0$ die aufrechtzuerhaltende Amplitude und $x_1$ und $x_2$ die Komponenten der Signale sind, die von den beiden um 90° phasenversetzten Fühlern geliefert und durch die in Phase befindliche Komponente der Trägerwelle demoduliert werden, sowie Mittel zur Herstellung eines Signals zur Unterhaltung der Amplitude, das an die Wandler angelegt wird und das ausgehend von diesem Abweichungssignal und von trigonometrischen Funktionen des Winkels θ erhalten wird, (und zwar nach) Remodulation durch die um 90° phasenverschobene Komponente der Trägerwelle.

4. Gerät nach Anspruch 2 oder 3, **dadurch gekennzeichnet, dass** diese Mittel ferner einen Präzessionszweig umfassen, der den Betrieb des Geräts als Gyrometer gestattet und als Eingang einen Sollwert $\theta_c$ des Winkels θ empfängt und der Mittel zum Messen von $\theta_c$-θ und Mittel zur Multiplikation mit trigonometrischen Funktionen des Winkels θ und zum Addieren zu Termen zur Aufrechterhaltung der Amplitude vor Remodulation aufweist.

5. Gerät nach Anspruch 4, **gekennzeichnet durch** Mittel, um dem $\theta_c$-θ darstellenden Term eine Neigung der progressiven Änderung von $\theta_c$ hinzuzufügen.

6. Gerät nach Anspruch 5, **dadurch gekennzeichnet, dass** die Änderung eine progressive Neigung von 0° bis 360° und dann von 360° bis 0° ist.

EP 0 810 418 B1

FIG.1.

FIG.2.

9

FIG.3.

$x_2 \cos\theta - x_1 \sin\theta$    $\theta_e - \theta$   48   $G_T(p)$   $C_T$   50   $\dfrac{1}{p}$   $\dot{\theta}$   $\theta$   52   $-\dfrac{1}{\alpha}$   $\dot{\psi}$   $\psi$   $\alpha$

22   $x_3 \cos\theta + x_4 \sin\theta$   $a \sin x_0$   $G_F(p)$   $C_F$   V C O   $\phi$   Q   24   20

DE $16_1$   $\phi$   $x_1$   Q   $x_3$

DE $16_2$   $\phi$   $x_2$   Q   $x_4$

26   $a_0^2 - (x_1^2 + x_2^2)$   $G_A(p)$   $C_A$   28

30   $x_3 \sin\theta - x_4 \cos\theta$   $b.\cos x_0$   32   $G_Q(p)$   $C_Q$

40   $C_Q \sin\theta$   $\phi$   $42_1$   $14_1$

$C_A \cos\theta - C_P \sin\theta$   Q

$-C_Q \cos\theta$   $\phi$   44   $42_2$   $14_2$

$C_A \sin\theta + C_P \cos\theta$   Q

$\theta_c$   $\theta$   34   $\theta_c - \theta$   36   $G_P(p)$   46   $C_P$

45   t   VERS CALCULATEUR

$\eta_2$   $C_P$   $C_A$   $\theta$   $\eta_1$   $C_Q$

FIG.3A.

EP 0 810 418 B1

10

FIG.4.